Europäisches Patentamt

(19) **European Patent Office**

**Office européen des brevets**

(11) Numéro de publication: **0 210 094**
**B1**

(12) **FASCICULE DE BREVET EUROPEEN**

(45) Date de publication du fascicule du brevet:
**31.01.90**

(51) Int. Cl.⁴: **A 47 K 1/09**

(21) Numéro de dépôt: **86401370.1**

(22) Date de dépôt: **20.06.86**

(54) **Dispositif d'apprentissage de l'hygiène dentaire.**

(30) Priorité: **09.07.85 FR 8510473**

(43) Date de publication de la demande:
**28.01.87 Bulletin 87/5**

(45) Mention de la délivrance du brevet:
**31.01.90 Bulletin 90/5**

(84) Etats contractants désignés:
**BE CH DE GB IT LI**

(56) Documents cités:
**EP-A- 0 032 869**
**DE-A- 2 756 306**
**DE-A- 2 932 743**
**GB-A- 2 047 532**
**US-A- 3 998 234**

(73) Titulaire: **Arnaud, Daniel, 41 rue Chambre de l'Edit,**
**F-81100 Castres (FR)**

(72) Inventeur: **Arnaud, Daniel, 41 rue Chambre de l'Edit,**
**F-81100 Castres (FR)**

**Description**

La présente invention concerne le domaine de l'hygiène dentaire.

La présente invention concerne plus précisément un dispositif d'apprentissage de l'hygiène dentaire et constitue un perfectionnement aux dispositifs décrits dans la demande de brevet Française déposée le 25.04.1983 sous le n° 8 307 216 (n° de publication 2 544 602) au nom du Demandeur.

On sait que la carie dentaire est l'une des maladies la plus répandue à la surface du globe.

La majorité des experts s'accordent pour dire que l'un des moyens les plus surs pour faire reculer ce fléau serait de parvenir à motiver les enfants au brossage et l'hygiène dentaire.

Des efforts ont été faits pour rendre ces brossages moins monotones et plus attrayants.

On a tenté par exemple de réaliser des brosses de géométrie adaptée, par exemple au manche galbé, et présentant des couleurs variées, ainsi que des pâtes dentifrice de différentes couleurs.

On a également mis au moins des pâtes aux saveurs agréables.

Ces diverses tentatives n'ont cependant pas permis de familiariser de façon significative les enfants au brossage et à l'hygiène dentaire.

On a également tenté d'assimiler la brosse à dents à un jouet à l'intention des tout petits. Par ailleurs, on a tenté de séduire certains adultes en l'agrémentant de formes suggestives, des supports de brosse à dents assimilables à un jouet, et adaptés pour diffuser une mélodie lors de l'utilisation de la brosse à dents sont par exemple décrits dans la demande de brevet Européenne A-0 032 869 et le brevet GB-A-2 047 532.

Ces différents dispositifs rendent certes plus agréable le brossage dentaire aux enfants. Néanmoins, ces dispositifs ne sont d'aucune aide quant à l'apprentissage de l'hygiène dentaire, dans la mesure où ils ne permettent pas de conseiller l'enfant quant à la durée, à la fréquence du brossage et à la technique d'un brossage efficace.

Des tentatives dans ce sens ont été faites, comme décrit dans la demande de brevet Allemande DE-A-2 932 743 ou dans le brevet US-A-3 998 234.

D'une façon générale, ces dispositifs comprennent des systèmes d'horloge adaptés pour assister l'utilisateur en lui indiquant au cours de la séance de brossage, la durée de celle-ci, ou encore en l'avertissant, par exemple à l'aide d'un signal sonore, qu'une durée de brossage optimum est atteinte.

La demande de brevet DE-A 2 982 743 décrit par exemple un dispositif comprenant une embase apte à supporter une pluralité de brosses à dents, des moyens de commande associés respectivement à chaque brosse à dents et commutables d'un état de repos à un état d'activation lors du retrait de la brosse à dents, pour initialiser un système d'horloge mécanique apte à commander au bout d'un temps prédéterminé, par exemple de 3 minutes, l'émission d'un message sonore.

Dans la pratique, on constate néanmoins que ces dispositifs bien que très élaboré, ne permettent pas d'améliorer réellement l'hygiène dentaire.

La présente invention a pour but d'améliorer la position en proposant un nouveau dispositif permettant à tout utilisateur, et en particulier aux enfants, d'acquérir une technique de brossage efficace et une motivation au brossage dentaire quotidien.

Outre l'aspect attrayant du dispositif, le Demandeur a constaté que pour permettre de progresser efficacement dans l'apprentissage de l'hygiène dentaire, il était préférable de ne pas contraindre ou perturber l'utilisateur au cours de la séance de brossage elle-même, mais de corriger ultérieurement celui-ci en ce qui concerne la durée et la fréquence du brossage.

Cette technique permet de ne pas rendre l'utilisateur esclave d'un système d'horloge pilote qui lui serait ultérieurement indispensable, mais permet en revanche, sans contrainte extérieure, et sous forme de jeu, d'inciter l'utilisateur à procéder au brossage dentaire dans des conditions optimum, tant en ce qui concerne la durée du brossage que la fréquence.

Ces différents buts sont atteints selon la présente invention, par un dispositif d'apprentissage de l'hygiène dentaire, du type comprenant une embase apte à supporter au moins une brosse à dents, des moyens de commande associés respectivement à chaque brosse à dents et commutables d'un état de repos à un état d'activation lors du retrait de la brosse à dents, caractérisé par le fait que les moyens de commande sont de plus commutables de l'état d'activation à l'état de repos lors du dépôt de chaque brosse à dents sur l'embase et par le fait que le dispositif comprend de plus des moyens formant horloge contrôlés par les moyens de commande, aptes à mesurer la durée élémentaire d'utilisation de la brosse entre un retrait et un dépôt associés de celle-ci, des moyens de mémorisation aptes à mémoriser le cumul des durées élémentaires d'utilisation de chaque brosse sur une période prédéterminée, et des moyens d'analyse des informations mémorisées aptes à fournir à l'utilisateur une analyse de l'utilisation de la brosse permettant d'effectuer le contrôle du cumul des durées élémentaires d'utilisation de chaque brosse sur une période prédéterminée.

Selon un premier mode de réalisation avantageux conforme à la présente invention, les moyens de commande comprennent des boutons poussoirs actionnés par l'utilisateur lors du retrait de la brosse à dents hors de l'embase et lors du dépôt de la brosse à dents sur l'embase.

Selon un autre mode de réalisation avantageux de la présente invention, les moyens de commande comprennent des moyens sensibles au retrait d'une brosse à dents hors de l'embase et des moyens sensibles au dépôt d'une brosse à dents sur l'embase.

Selon une caractéristique avantageuse de l'invention, les moyens formant horloge comprennent des compteurs aptes à totaliser les durées élémentaires d'utilisation sur une période prédéterminée.

Selon une autre caractéristique avantageuse de l'invention, les moyens formant horloge comprennent des portes associées respectivement aux moyens de commande et rendues passantes lors de la commutation des moyens de commande à l'état d'activation.

De préférence, l'une des entrées de chaque porte est connectée à la sortie d'un oscillateur générant un signal oscillatoire de fréquence fixe.

Le Demandeur a par ailleurs constaté qu'il s'avérait intéressant d'assimiler le brossage dentaire à un jeu de compétition entre les différents membres d'une famille et propose pour cela que les moyens d'analyse soient adaptés pour comparer les informations mémorisées relatives à chaque brosse à dents.

Les moyens d'analyse peuvent par exemple être adaptés pour identifier la brosse à dents ayant été utilisée le plus longtemps sur ladite période prédéterminée.

Selon une autre caractéristique importante de la présente invention, le dispositif comprend des moyens de test permettant à l'utilisateur de mettre en service, à tout moment, des moyens d'analyse, pour connaître la valeur du cumul du temps d'utilisation de sa brosse depuis le début de ladite période prédéterminée.

Selon un mode de réalisation conforme à la présente invention, les moyens de test comprennent un bouton poussoir apte à commander la fermeture des portes précitées lorsqu'il est actionné.

Selon un autre mode de réalisation conforme à la présente invention, des moyens formant horloge de temps réel sont prévus et sont reliés aux moyens d'analyse des informations mémorisées pour permettre de mémoriser dans une mémoire des informations liées à l'heure en temps réel d'utilisation et d'effectuer le contrôle de la fréquence d'utilisation de chaque brosse sur une période déterminée.

D'autres caractéristiques et avantages de la présente invention apparaîtront à la lecture de la description détaillée qui va suivre et en regard des dessins annexés, donnés à titre d'exemple non limitatifs, et sur lesquels:

— la figure 1 représente une vue schématique générale sous forme de bloc fonctionnel des éléments essentiels du dispositif d'apprentissage de l'hygiène dentaire conforme à la présente invention,

— la figure 2 représente sous forme schématique un mode de réalisation des moyens de commande conformes à la présente invention,

— la figure 3 illustre sous forme schématique une embase utilisée dans un dispositif d'apprentissage de l'hygiène dentaire conforme à la présente invention, et

— la figure 4 illustre sous forme d'organigramme schématique le fonctionnement du dispositif conforme à la présente invention.

D'une façon générale, comme cela est illustré sur les figures annexées, le dispositif d'apprentissage de l'hygiène dentaire conforme à la présente invention comprend:

— une embase 110,
— des moyens de commande 10, 20, 30, 40
— des moyens formant horloge 70, 11, 21, 31, 41,
— des moyens de mémorisation 16, 26, 36, 46,
— des moyens d'analyse 50 et
— des moyens générateurs d'informations sous forme visuelle ou sonore 60, 100.

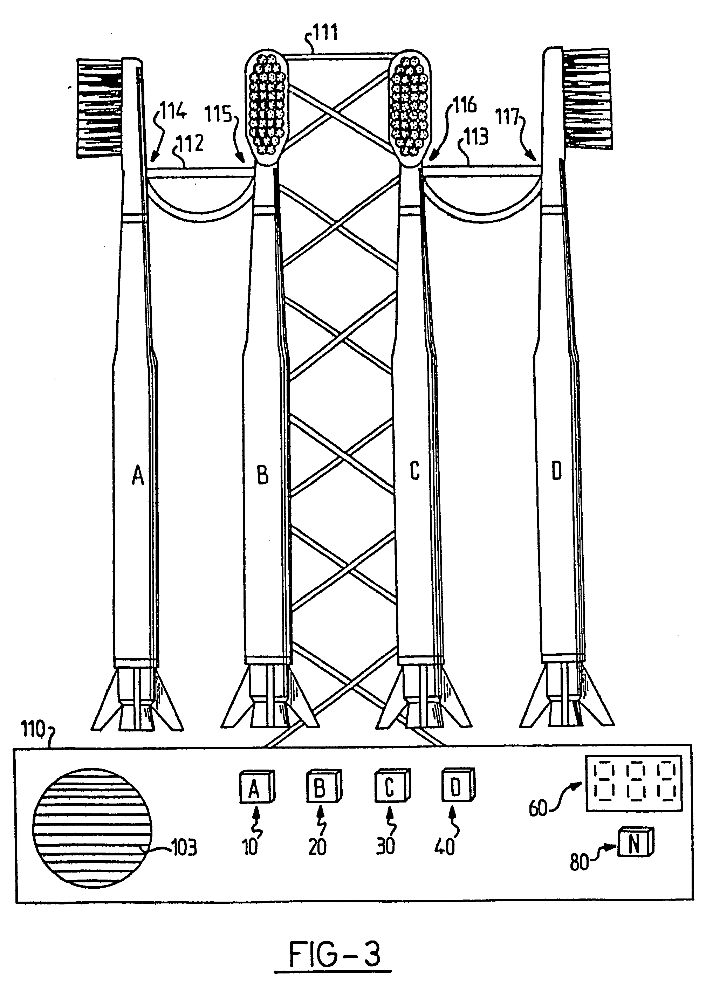

Comme cela est illustré sur la figure 3, l'embase 110 est adaptée pour supporter au moins une brosse à dents, et de préférence, une pluralité de celles-ci.

Selon l'illustration de la figure 3, l'embase 110 est surmontée d'une colonne 111 qui porte des bras horizontaux 112, 113 munis à leurs extrémités 114, 115, 116 et 117 de systèmes d'accrochage et de retenue des brosses à dents A, B, C et D.

Selon l'illustration de la figure 3 annexée, de façon similaire à l'objet de la demande de brevet Française 8 307 216 précitée, le corps des brosses à dents a la forme générale d'une fusée et l'embase 110 surmontée de la colonne 111 symbolise une base de lancement de fusée. Un tel ensemble s'avère attrayant en particulier pour les enfants.

Bien entendu, d'autres modèles d'embase et de brosse à dents sont susceptibles d'être utilisés dans le cadre de la présente invention.

Les moyens de commande 10, 20, 30 et 40 précédemment évoqués, sont associés respectivement à chaque brosse à dents disposée sur l'embase 110.

Les moyens de commande 10, 20, 30 et 40 sont adaptés pour être commutés d'un état de repos à un état d'activation lors du retrait de la brosse à dents et de l'état d'activation à l'état de repos lors du dépôt de la brosse à dents associée sur l'embase.

Comme on le décrira ultérieurement, les moyens de commande peuvent faire l'objet de divers mode de réalisation.

Il en est de même des moyens formant horloge. Ceux-ci sont contrôlés par les moyens de commande 10, 20 30 et 40 et adaptés pour mesurer la durée élémentaire d'utilisation de la brosse entre un retrait et un dépôt associés de celle-ci.

Les moyens de mémorisation sont adaptés pour mémoriser les durées élémentaires d'utilisation sur une période prédéterminée, tandis que les moyens d'analyse 50 sont adaptés pour fournir à l'utilisateur une analyse critique de l'utilisation de la brosse après traitement des informations mémorisées.

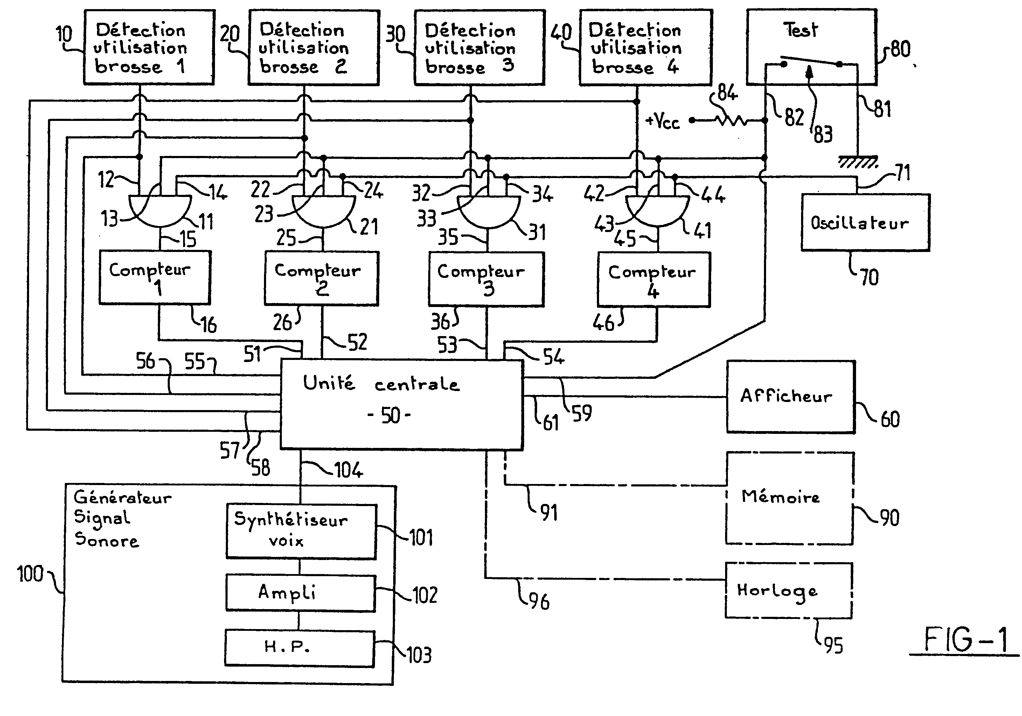

On va maintenant décrire le mode de réalisation illustré sur la figure 1.

Selon le mode de réalisation représenté sur cette figure, la sortie des différents moyens de commande 10, 20, 30, 40 est reliée respectivement à une première entrée 12, 22, 32, 42 d'une porte ET à trois entrées respectivement référencées 11, 21, 31, 41.

Les secondes entrées 13, 23, 33, 43 des mêmes portes ET 11, 21, 31 et 41 sont reliées en commun à la sortie d'un élément de test 80 dont le rôle sera décrit plus en détail par la suite.

Enfin, les troisièmes entrées 14, 24, 34 et 44 des portes ET 11, 21, 31 et 41 sont reliées en commun à la sortie 71 d'un oscillateur 70. Ce dernier génère un signal oscillatoire de fréquence fixe.

La structure d'un tel oscillateur 70 classique en elle-même ne sera pas décrite en détail par la suite.

Les sorties 15, 25, 35 et 45 des différentes portes ET 11, 21, 31 et 41 sont reliées respectivement à l'entrée de comptage d'un compteur associé 16, 26, 36 et 46.

On supposera dans un premier temps que les secondes bornes 13, 23, 33 et 43 issues de l'élément de test 80 sont à un niveau logique haut.

Dans ces conditions, l'homme de l'art comprendra aisément que la commutation de l'état de repos à l'état d'activation des moyens de commande 10, 20, 30 ou 40 permet d'ouvrir la porte ET associée 15, 25, 35 ou 45, soit lors du retrait d'une brosse à dents hors de l'embase 110.

Par contre, la commutation de l'état d'activation à l'état de repos des moyens de commande, soit lors du dépôt d'une brosse à dents sur l'embase ferme la porte ET 11, 21, 31 ou 41 associée.

De ce fait, le nombre d'impulsions issues de la sortie 15, 25, 35 ou 45 de la porte ET en question, entre la commutation de l'état de repos à l'état d'activation et la commutation de l'état d'activation à l'état de repos des moyens de commande associés est directement proportionnelle à la durée du brossage dentaire.

Ces impulsions sont par ailleurs appliquées sur les compteurs 16, 26, 36 et 46. Il en résulte que le contenu de ces compteurs reflètent le cumul des durées élémentaires d'utilisation de la brosse associée sur une période prédéterminée, par exemple d'une semaine.

Les sorties des compteurs 16, 26, 36 et 46 sont reliées respectivement aux entrées 51, 52, 53 et 54 d'une unité centrale 50 pilotée par exemple par microprocesseur.

Par ailleurs, les sorties des moyens de commande 10, 20, 30, 40 sont reliées respectivement aux entrées 55, 56, 57, 58 de l'unité centrale 50.

La sortie 82 de l'élément de test 80 est également reliée à l'entrée 59 de l'unité centrale 50.

Cette dernière attaque par sa sortie 61 un afficheur 60, par exemple à cristaux liquides, et par sa sortie 104 un générateur 100 de signal sonore.

Selon l'illustration donnée sur la figure 1, le générateur de signal sonore 100 comprend un synthétiseur de voix 101, un amplificateur 102 et un générateur de sons, par exemple un haut-parleur à membrane 103.

Bien entendu, le générateur 100 de signal sonore ainsi formé, peut être remplacé par tout moyen fonctionnellement équivalent, tel que par exemple des systèmes à mémorisation de messages sur bandes ou disques associés à des dispositifs de lecture appropriés.

L'actionnement de l'élément de test 80 par un utilisateur permet de fermer les portes ET 11, 21, 31 et 41.

Pour cela, l'élément de test applique lors de son actionnement, un signal de niveau bas sur la seconde entrée 13, 23, 33 et 43 des portes ET 11, 21, 31 et 41.

Pour ce faire, la sortie 82 de l'élément de test 80, reliée aux secondes entrées précitées des portes ET, est connectée par l'intermédiaire d'une résistance 84 à une bande d'alimentation positive +Vcc.

Par ailleurs, l'élément de test 80 comprend une seconde sortie 81 reliée à la masse et un interrupteur 83 apte à court-circuiter ces deux sorties.

L'actionnement du bouton de test 80 a pour but d'indiquer à l'unité centrale 50 qu'un utilisateur cherche à connaître le contenu d'un compteur 16, 26, 36 ou 46.

Ce compteur est identifié par celui des moyens de commande 10, 20, 30 ou 40 qui est sollicité simultanément à l'élément de test 80.

On remarquera que l'actionnement de l'élément de test 80 interdit l'évolution des compteurs 16, 26, 36, 46.

De ce fait, lors de l'actionnement simultané de l'élément de test 80 et de l'un des moyens de commande 10, 20, 30 ou 40, l'unité centrale 50 peut lire le contenu du compteur associé, et afficher une information représentative du cumul des durées élémentaires d'utilisation de la brosse à dents en question, depuis le début de la période prédéterminée, par exemple le début de la semaine, sur l'afficheur 60.

Le cas échéant, l'unité centrale 50 peut être adaptée, lorsque l'élément de test 80 est actionné, pour comparer le contenu des différents compteurs 16, 26, 36 et 46, et pour émettre un signal sonore félicitant l'utilisateur si le moyen de commande sollicité simultanément à l'élément de test 80 correspond au compteur 16, 26, 36 ou 46 présentant le contenu le plus élevé.

On remarquera que le processus qui vient d'être décrit permet soit de faire un bilan du cumul des durées élémentaires de brossage pour chaque utilisateur, à la fin d'une période prédéterminée, par exemple à la fin d'une semaine, soit de mettre en service à tout moment les moyens d'analyse 50 pour connaître la valeur du cumul du temps d'utilisation d'une brosse depuis le début de ladite période prédéterminée.

Le signal sonore est émis par le générateur 100.

Comme on l'a évoqué précédemment, les moyens de commande 10, 20, 30 et 40 peuvent faire l'objet de divers modes de réalisation.

Selon un premier mode de réalisation illustré par exemple sur la figure 3, chaque moyen de commande est formé d'un bouton poussoir placé sur l'embase 110 et actionné une première fois lorsque l'utilisateur se saisit de sa brosse pour ouvrir les portes de comptage 11, 21, 31 et 41 et une seconde fois lorsque l'utilisateur repose sa brosse sur l'embase.

Pour faciliter un tel processus, il est préférable d'utiliser des brosses à dents A, B, C, D de couleurs différentes, et des boutons poussoirs 10, 20, 30, 40 de couleur respectivement identique.

Néanmoins, afin d'éviter à l'utilisateur de fausser le jeu, il est préférable que les moyens de commande 10, 20, 30, 40 comprennent des moyens sensibles au retrait d'une brosse à dents hors de l'embase et des moyens sensibles au dépôt d'une brosse à dents sur l'embase.

Les moyens sensibles peuvent par exemple comporter des moyens optiques classiques en eux-mêmes.

On peut également envisager d'utiliser des moyens de commande formés de micro-interrupteurs.

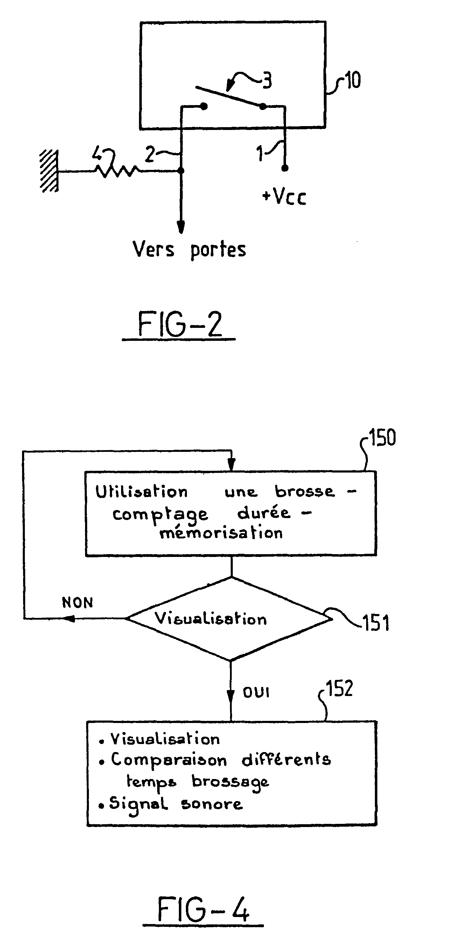

Comme cela est représenté sur la figure 2, on peut par exemple utiliser des micro-interrupteurs 3 dont une première borne 1 est reliée à une alimentation positive +Vcc, tandis que la seconde borne 2 est reliée à la masse par l'intermédiaire d'une résistance 4, la seconde borne 2 étant en outre reliée à la première entrée 12, 22, 32 et 42 des portes ET, 11, 21, 31 et 41.

Ce mode de connexion suppose que l'interrupteur 3 est ouvert lorsque les brosses sont disposées sur l'embase 110, tandis que l'interrupteur 3 est porté à l'état fermé lorsque les brosses sont retirées de l'embase.

L'homme de l'art comprendra en effet aisément que dans un tel cas, lorsque les brosses à dents sont disposées sur l'embase, les premières entrées 12, 22, 32 et 42 des portes ET 11, 21, 31 et 41 sont portées à un niveau logique bas. Par contre, lorsque les brosses à dents sont retirées, l'interrupteur 3 étant fermé, les mêmes entrées 12, 22, 32 et 42 sont portées au niveau logique haut.

Pour un interrupteur 3 fonctionnant en mode inversé, c'est-à-dire fermé lorsque les brosses à dents sont disposées sur l'embase et ouvert lorsque les brosses à dents sont retirées de l'embase, il serait nécessaire d'inverser les polarités d'alimentation au niveau de la borne 1 et de la résistance 4.

Le processus d'utilisation précédemment décrit a été schématisé sous forme de 3 étapes sur la figure 4.

La sollicitation des moyens de commande 10, 20, 30 ou 40 correspondant à l'utilisation d'une brosse à dents induit le comptage de durée élémentaire d'utilisation et la mémorisation de celle-ci sur les compteurs 16, 26, 36 et 46, comme illustré à l'étape 150.

Cette étape est réitérée tant que l'élément de test 80 n'est pas actionné, ce qui correspond à une réponse négative du test 151, c'est-à-dire qu'aucune visualisation n'est demandée.

Par contre, lorsque ce test est positif, l'unité centrale procède au cours de l'étape 152 à la visualisation du cumul des durées élémentaires d'utilisation de la brosse associées aux moyens de commande sollicités, et le cas échéant, comme cela a été précédemment évoqué, à la comparaison des différents temps de brossage mémorisés dans les compteurs 16, 26, 36 et 46 et à la génération d'un signal sonore en conséquence.

Bien entendu, la présente invention n'est aucunement limitée au mode de réalisation particulier qui vient d'être décrit, mais s'étend à toute variante conforme à l'invention telle que revendiquée.

A titre d'exemple, on peut envisager de supprimer les compteurs 16, 26, 36, 46 et de relier directement les sorties 15, 25, 35, 45 aux entrées 51, 52, 53 et 54 de l'unité centrale 50.

Les durées élémentaires d'utilisation sont alors mémorisées dans une mémoire 90 connectée à la sortie 91 de l'unité centrale 50.

Le cas échéant, afin de contrôler non seulement le cumul des durées élémentaires d'utilisation, mais également l'utilisation à fréquence régulière et optimum de la brosse, le dispositif d'apprentissage conforme à la présente invention peut comporter en outre des moyens formant horloge de temps réel 95 reliés à l'entrée 96 de l'unité centrale 50 pour permettre de mémoriser également dans la mémoire 90 des informations liées à l'heure en temps réel d'utilisation.

Cette caractéristique permet en particulier à la fin de la période prédéterminée d'utilisation, par exemple à la fin d'une semaine, de contrôler que l'utilisateur qui a atteint le cumul des durées élémentaires d'utilisation le plus élevé a en outre respecté un cycle régulier d'utilisation.

Le dispositif qui vient d'être décrit peut par ailleurs faire l'objet de nombreuses options.

L'unité centrale 50 peut par exemple être adaptée pour générer un signal sonore correspondant par exemple à des conseils d'utilisation, chaque fois qu'un moyen de commande est commuté de l'état de repos à l'état d'activation, c'est-à-dire au début de chaque séance de brossage dentaire.

L'unité centrale 50 peut de même être adaptée pour déterminer le temps moyen de chaque brossage pour un utilisateur donné.

L'unité centrale peut de plus être adaptée pour opérer le cumul des durées élémentaires d'utilisation sur une période de temps importantes, et de contrôler en permanence ce cumul avec une valeur de référence mémorisée correspondant à une durée de «péremption».

Cet état peut être indiqué à l'utilisateur sous forme d'un message sonore, ou encore sous forme d'un message lumineux, par exemple en commandant le clignotement d'une diode électroluminescente associée disposée sur l'embase 110.

## Revendications

1. Dispositif d'apprentissage de l'hygiène dentaire du type comprenant une embase (110) apte à supporter au moins une brosse à dents (A, B, C, D), des moyens de commande (10, 20, 30, 40) associés respectivement à chaque brosse à dents et commutables d'un état de repos à un état d'activation lors du retrait de la brosse à dents, caractérisé par le fait que les moyens de commande sont en outre adaptés pour être commutés de l'état d'activation à l'état de repos lors du dépôt de la brosse à dents sur l'embase, et par le fait que le dispositif comprend de plus des moyens formant horloge (70, 11, 21, 31, 41) contrôlés par les moyens de commande, aptes à mesurer la durée élémentaire d'utilisation de chaque brosse entre un retrait et un dépôt associés de celle-ci, des moyens de mémorisation (16, 26, 36, 46, 90) aptes à mémoriser le cumul des durées élémentaires d'utilisation de chaque brosse sur une période prédéterminée et des moyens (50) d'analyse des informations mémorisées aptes à fournir à l'utilisateur une analyse de l'utilisation de la brosse permettant d'effectuer le contrôle du cumul des durées élémentaires d'utilisation de chaque brosse sur une période prédéterminée.

2. Dispositif d'apprentissage de l'hygiène dentaire selon la revendication 1, caractérisé par le fait que les moyens de commande (10, 20, 30, 40) comprennent des boutons poussoirs actionnés par l'utilisateur lors du retrait de la brosse à dents hors de l'embase et lors du dépôt de la brosse à dents sur l'embase.

3. Dispositif d'apprentissage de l'hygiène dentaire selon la revendication 1, caractérisé par le fait que les moyens de commande (10, 20, 30, 40) comprennent des moyens sensibles au retrait d'une brosse à dents hors de l'embase (110) et des moyens sensibles au dépôt d'une brosse à dents sur l'embase.

4. Dispositif d'apprentissage de l'hygiène dentaire selon l'une des revendications 1 à 3, caractérisé par le fait que les moyens formant horloge comprennent des compteurs (16, 26, 36, 46) aptes à totaliser les durées élémentaires d'utilisation sur une période prédéterminée.

5. Dispositif d'apprentissage de l'hygiène dentaire selon l'une des revendications 1 à 4, caractérisé par le fait que les moyens formant horloge comprennent des portes (16, 26, 36, 46) associées respectivement aux moyens de commande et rendues passantes lors de la commutation des moyens de commande à l'état d'activation.

6. Dispositif d'apprentissage de l'hygiène dentaire selon la revendication 4, caractérisé par le fait que l'une des entrées de chaque porte (11, 21, 31, 41) est connectée à la sortie d'un oscillateur (70) générant un signal oscillatoire de fréquence fixe.

7. Dispositif d'apprentissage de l'hygiène dentaire selon l'une des revendications 1 à 6, comprenant une embase qui supporte une pluratlité de brosses à dents, caractérisé par le fait que les moyens d'analyse (50) sont adaptés pour comparer les informations mémorisées relatives à chaque brosse à dents.

8. Dispositif d'apprentissage de l'hygiène dentaire selon l'une des revendications 1 à 7, comprenant une embase qui supporte une pluralité de brosse à dents, caractérisé par le fait que les moyens d'analyse (50) sont adaptés pour identifier la brosse à dent ayant été utilisée le plus longtemps sur ladite période prédéterminée.

9. Dispositif d'apprentissage de l'hygiène dentaire selon l'une des revendications 1 à 8, caractérisé par le fait qu'il comprend des moyens de test (80) permettant à l'utilisateur de mettre en service à tout moment les moyens d'analyse (50) pour connaître la valeur du cumul du temps d'utilisation de sa brosse depuis le début de ladite période prédéterminée.

10. Dispositif d'apprentissage de l'hygiène dentaire selon la revendication 9, caractérisé par le fait que les moyens de test (80) comprennent un bouton poussoir aptes à commander la fermeture des portes (11, 21, 31, 41), lorsqu'il est actionné.

11. Dispositif d'apprentissage de l'hygiène dentaire selon la revendication 1, caractérisé par le fait qu'il comprend des moyens (95) formant horloge de temps réel reliés aux moyens (50) d'analyse des informations mémorisées pour permettre de mémoriser dans une mémoire (90) des informations liées à l'heure en temps réel d'utilisation et d'effectuer le contrôle de la fréquence d'utilisation de chaque brosse sur une période prédéterminée.

**Patentansprüche**

1. Vorrichtung für die Lehre der Zahnpflege nach folgender Art: eine Basis (110), die wenigstens eine Zahnbürste (A, B, C, D) und Antriebsmittel (10, 20, 30, 40) stützen kann. Diese Antriebsmittel sind mit jeder Zahnbürste verbunden und gehen von einem Ruhezustand zu einem Aktivierungszustand beim Zurückziehen der Zahnbürste über. Ferner gehen diese Antriebsmittel vom Aktivierungszustand zum Ruhezustand beim Ablegen der Zahnbürste auf die Basis über.
Diese Vorrichtung enthält ausserdem:

— Uhrmittel (70, 11, 21, 31, 41), die von den Antriebsmitteln überprüft sind und die grundsätzliche Ausnutzungszeit von jeder Zahnbürste zwischen dem Zurückziehen und dem Ablegen messen,
— Gedächtnismittel (16, 26, 36, 46, 90), die die grundsätzlichen Gesamtausnutzungszeiten von jeder Zahnbürste während einer vorherbestimmten Zeit eintragen,
— Erforschungsmittel (50) über die eingeschriebenen Auskünfte: der Benutzer hat damit eine Übersicht über die Benutzung der Zahnbürste und kann die grundsätzlichen Gesamtausnutzungszeiten von jeder Zahnbürste während einer vorherbestimmten Zeit nachprüfen.

2. Die Vorrichtung für die Lehre der Zahnpflege nach der 1. Forderung ist mit Antriebsmitteln (10, 20, 30, 40) ausgestattet, die Druckknöpfe enthalten. Der Benutzer betätigt diese Druckknöpfe beim Zurückziehen der Zahnbürste aus der Basis und beim Ablegen der Zahnbürste auf die Basis.

3. Die Vorrichtung für die Lehre der Zahnpflege nach der 1. Forderung ist mit Antriebsmitteln (10, 20, 30, 40) ausgestattet, die empfindliche Stelle beim Zurückziehen der Zahnbürste aus der Basis (110) und empfindliche Stelle beim Ablegen der Zahnbürste auf die Basis enthalten.

4. Die Vorrichtung für die Lehre der Zahnpflege nach einer von den Forderungen 1 zu 3 ist mit Uhrmittel ausgestattet, die Zähler (16, 26, 36, 46) enthalten. Diese Zähler rechnen die grundsätzlichen Ausnutzungszeiten während einer vorherbestimmten Zeit zusammen.

5. Die Vorrichtung für die Lehre der Zahnpflege nach einer von den Forderungen 1 zu 4 ist mit Uhrmittel ausgestattet, die Türen (16, 26, 36, 46) enthalten. Diese Türen sind mit den Antriebsmitteln verbunden und werden Durchgänge bei der Schaltung der Antriebsmittel vom Ruhezustand zum Aktivierungszustand.

6. Die Vorrichtung für die Lehre der Zahnpflege nach der 4. Forderung ist mit Türen ausgestattet: einer von den Eingängen jeder Türen (11, 21, 31, 41) ist mit dem Ausgang von einem Schwingungsapparat (70) verbunden, der ein Schwingungssignal mit regelmässiger Wiederholung erzeugt.

7. Die Vorrichtung für die Lehre der Zahnpflege nach einer von den Forderungen 1 zu 6 enthält eine Basis, die mehrere Zahnbürsten trägt. Die Erforschungs-Mittel (50) ermöglichen eine Vergleichung zwischen den verschiedenen Auskünften in Bezug auf jede Zahnbürste.

8. Die Vorrichtung für die Lehre der Zahnpflege nach einer von den Forderungen 1 zu 7 enthält eine Basis, die mehrere Zahnbürsten trägt. Die Erforschungs-Mittel (50) ermöglichen, die Zahnbürste zu erkennen, die während einer vorherbestimmten Zeit am längsten benutzt wurde.

9. Die Vorrichtung für die Lehre der Zahnpflege nach einer von den Forderungen 1 zu 8 enthält Probemittel (80), infolge denen der Benutzer die Erforschungsmittel zu jeder Zeit in Betrieb setzen kann, um den Wert der Gesamtausnutzungszeiten von seiner Zahnbürste vom Anfang einer vorherbestimmten Zeit zu kennen.

10. Vorrichtung für die Lehre der Zahnpflege nach der 9. Forderung enthält Probemittel (80), die das Abschliessen der Türen (11, 21, 31, 41) mit einem Druckknopf beordern, wenn er im Betrieb ist.

11. Die Vorrichtung für die Lehre der Zahnpflege nach der 1. Forderung enthält Uhrmittel (95), die mit den Erforschungsmitteln (50) über die eingeschriebenen Auskünfte verbunden sind. Das erlaubt, die Auskünfte über die genaue Ausnutzungszeit im Gedächtnis (90) einzutragen und die Gesamtausnutzung von jeder Zahnbürste während einer vorherbestimmten Zeit zu prüfen.

## Claims

1. Training device for dental hygiene, comprising one base (110) capable of taking at least one tooth-brush (A, B, C and D), control system (10, 20, 30 and 40) linked to each tooth-brush respectively and which can be changed from a state of inactivity to a state of activation when the tooth-brush is withdrawn. This is all characterized by the fact that the control system is moreover adapted to be changed from a state of activation to a state of inactivity when the tooth-brush is placed on its base, and by the fact that the device comprises other than means forming a clock (70, 11, 21, 31 and 41) monitored by the system of control, capable of measuring the elementary length of time of use of each brush between each withdrawal and replacement of same, but also means of memorization (16, 26, 36, 46 and 90) capable of memorizing the whole of the elementary lengths of time of use of each brush over a predetermined period and the means (50) of analysing the memorized data capable of supplying the user with an analysis of use of the brush. This enables the whole of the elementary lengths of time of use for each brush to be controlled over a pre-determined period.

2. Training device for dental hygiene as per Claim 1, characterized by the fact that the means of control (10, 20, 30 and 40) include push-buttons operated by the user when withdrawing the tooth-brush from the base and when placing the tooth-brush on the said base.

3. Training device for dental hygiene as per Claim 1, characterized by the fact that the means of control (10, 20, 30 and 40) include sensitive devices at withdrawal of a tooth-brush from the base (110) and sensitive devices at replacement of a tooth-brush upon the base.

4. Training device for dental hygiene as per one of Claims 1 to 4, characterized by the fact that the means forming a clock include counters (16, 26, 36 and 46) capable of adding up the total elementary lengths of time of use over a pre-determined period.

5. Training device for dental hygiene as per one of Claims 1 to 4, characterized by the fact that the means forming a clock include doors linked respectively to the means of control and opened when the means of control are activated.

6. Training device for dental hygiene as per Claim 4, characterized by the fact that one of the entrances to each door (11, 21, 31 and 41) is connected to the exit of an oscillator (70) generating a fixed-frequency oscillatory signal.

7. Training device for dental hygiene as per one of Claims 1 to 6, comprising a base supporting a number of tooth-brushes, characterized by the fact that the means of analysis (50) are adapted to compare the data memorized for each tooth-brush.

8. Training device for dental hygiene as per one of Claims 1 to 7, comprising a base supporting a number of tooth-brushes, characterized by the fact that the means of analysis (50) are adapted to identify the particular tooth-brush which has been used for the longest time over the said predetermined period.

9. Training device for dental hygiene as per one of Claims 1 to 8, characterized by the fact that it includes means of testing (80) enabling the user at any moment to operate the means of analysis (50) in order to learn the value of the whole time of use of its brush from the beginning of the said pre-determined period of time.

10. Training device for dental hygiene as per Claim 9, characterized by the fact that the means of testing (80) include a push-button capable of operating the shutting of the doors (11, 21, 31 and 41) when activated.

11. Training device for dental hygiene as per Claim 1, characterized by the fact that it includes means (95) forming a clock giving real time linked to the means (50) of analysis of the data memorized in order to allow the data linked to the time in real time of use to be memorized in a memory (90) and to carry out tests of frequency of use of each brush over a pre-determinded period.

FIG-1

EP 0 210 094 B1

+Vcc

Vers portes

FIG-2

Utilisation une brosse —
comptage durée —
mémorisation

NON

Visualisation

OUI

• Visualisation
• Comparaison différents
  temps brossage
• Signal sonore

FIG-4

FIG-3